# EUROPEAN PATENT APPLICATION

(11) **EP 1 262 873 A1**
(43) Date of publication of application: **04.12.2002**
(21) Application number: 01650068.8
(22) Date of filing: 31.05.2001
(51) Int. Cl.: G06F 11/273, G06F 11/22

(54) **Method and apparatus for providing customer support**

(71) Applicant: Gateway, Inc., Poway, California 92064 (US)
(72) Inventor: Maher, John David, Fairview, Dublin 3 (IE); Martin, Jeremy Nicolas, Santry, Dublin 9 (IE)
(74) Representative: McCarthy, Denis Alexis

(57) **Abstract**

Support is provided to a user of a computer (10) by connecting to a web server (20) of a customer support service over a network such as the Internet. The customer accesses utility (30) on the server (20) and downloads it to a computer (10). The utility (30) detects specified hardware and software components from registry (15) and creates a listing of the detected components in a html document which can be transmitted to the web server (20). An ASP page (25) is then created presenting information pertinent to the listed components

## Description

The present invention relates to a method of and apparatus for providing customer support via a computer network and more specifically to providing customer support in diagnosing and correcting problems and faults associated with computers operated by users in various locations.

For companies providing customer support to users of their personal computers, much use is made of customer help desks, customer help Internet sites and diagnostic systems. On a customer help desk, a service technician discusses the problem with a user on the telephone, suggests possible solutions and may also mimic the operation being performed by the user on a service computer so as to advise on a solution. On an Internet help site assistance may be provided by providing access to a web based library, access to questions and answer sessions, to more interactive assistance where there is intervention by a service technician who can interact with the user at the desired level of assistance. In the diagnostic based assistance system the service computer interacts with the user's computer and uploads details of the systems located in the user's computer with a view to allow the technician evaluate the hardware operating on the user's computer.

The problems associated with the first and second methods in that a lot of time is wasted by both the user and the support technician to establish the specific information and assistance required. With the third method users are reluctant to permit such direct intervention and the support company does not have any great desire to upload and store such specific information which may only be required once.

The object of the invention to alleviate the disadvantages associated with the prior art.

The present invention provides a method of providing support to a user of a computer comprising detecting specified hardware and software components of the user's computer from a register means in the computer, creating a listing of the detected hardware and software components; and storing the said listing on the user's computer as a separate retrievable document.

Preferably, the method includes creating the listing of the detected hardware and software components as a data file.

Ideally, the method includes creating the listing of the detected hardware as document in a hypertext, markup language (html).

Additionally, the method includes transmitting the listing to a customer support service via a computer network, conducting a search of the customer support service's library of reference material, preparing a second listing of reference material, information and/or advice relevant to the customer's listed components and posting said second listing to a web page for the user to evaluate.

Conveniently, the method includes opening documents identified in said second listing, providing access to information specified in said second listing and when appropriate providing updates of information, code or instructions.

Preferably, the method includes installing in the computer of the user a program adapted to implement the features of the method.

Ideally, the method includes downloading the program from the website of the customer support service.

Additionally, the method includes overwriting the stored listing to update the listing of the detected hardware and software components.

The present invention also provides an apparatus for providing support to a user of a computer comprising means for detecting specified hardware and software components of the user's computer from a register means in the computer, means for creating a listing of the detected hardware and software components; and means for storing the said listing on the user's computer as a separate retrievable document.

Preferably, the apparatus includes means for creating the listing of the detected hardware and software components as a data file.

Ideally, the apparatus includes means for creating the listing of the detected hardware as document in a hypertext, markup language (html).

Additionally, the apparatus includes means for transmitting the listing to a customer support service via a computer network, means for conducting a search of the customer support service's library of reference material, means for preparing a second listing of reference material, information and/or advice relevant to the customer's listed components; and means for posting said second listing to a web page for the user to evaluate.

Additionally, the apparatus includes means for opening documents identified in said second listing, means for providing access to information specified in said second listing and optionally for providing updates of information, code or instructions.

Preferably, the apparatus includes means for installing in the computer of the user a program adapted to operate the said means of the apparatus.

Ideally, the apparatus includes means for downloading the program from the website of the customer support service.

Conveniently, the apparatus includes overwriting the stored listing to update the listing of the detected hardware and software components.

The invention will hereinafter be more particularly described with reference to the accompanying drawings, which illustrate by way of example only, one embodiment of a customer support system according to the invention. In the drawings: -

Figures 1 to 4 are a series of schematic illustrations detailing the sequence of interaction between the computer of a customer support service and a user's computer.

Figure 5 is a flow chart illustrating the operation of the program for the customer support system and figures 6 and 7 are samples of some user interface screens generated by the system.

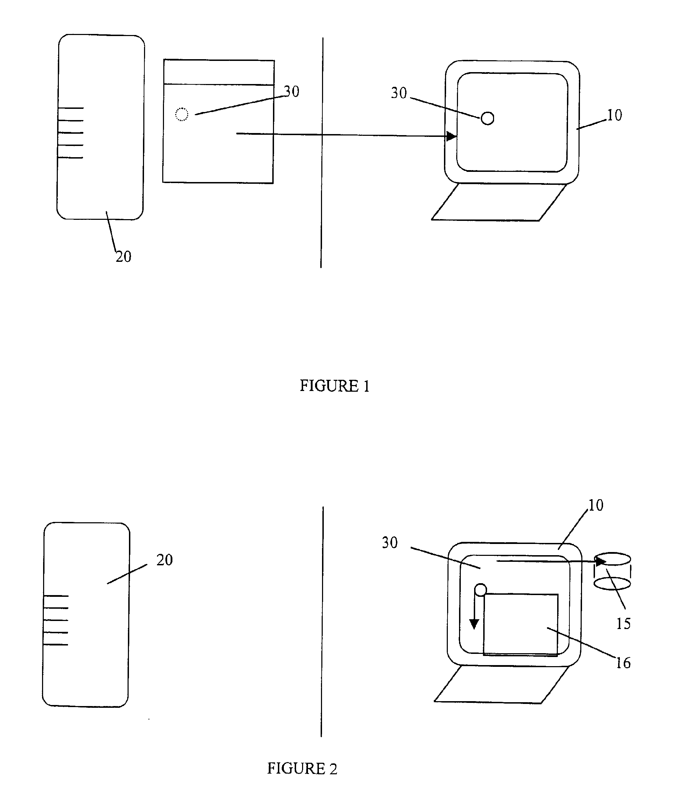

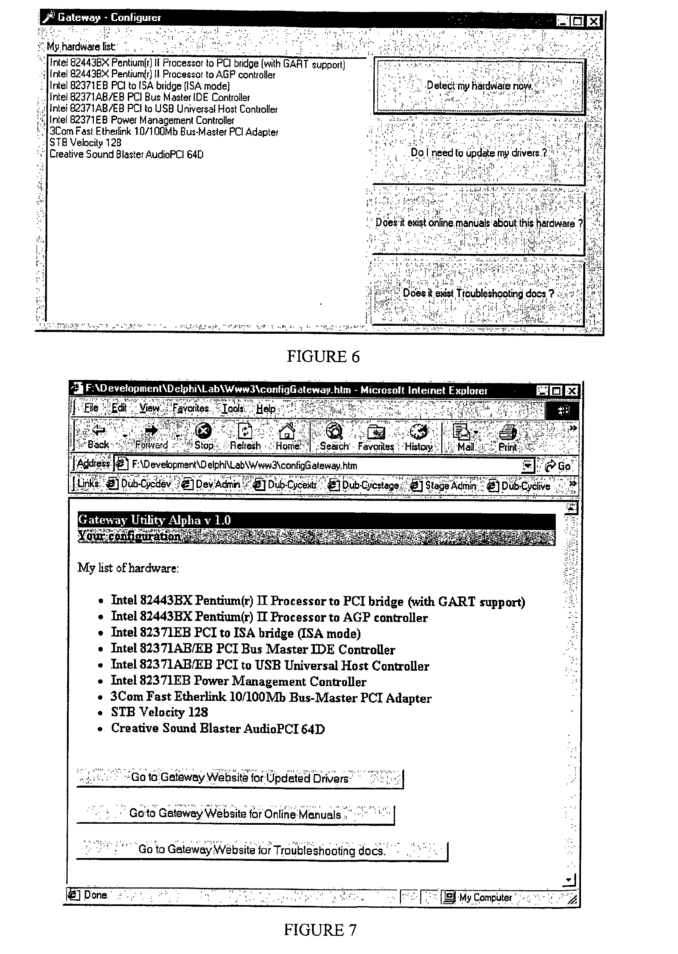

Referring to the drawings, a method of and apparatus for providing customer support over a computer will be exemplified with reference to Figures 1-4. A user's computer 10 connects with a web server 20 of a customer support service over a network such as the Internet. To obtain the benefit of the invention, the customer accesses the utility 30 on the server 20 and downloads it to his computer 10. The utility 30 is a downloadable executable file. Once downloaded the customer is given the choice to run the utility or to save it on his hard disk. Referring to Figure 2, when the customer runs the utility, it scans the registry 15 in the user's computer 10 and creates a file listing the key software and hardware components of the computer. An example of this type of listing is shown in figure 6. The file creates a html page 16 listing the key components and their identification tags. This html file as viewed on a browser is shown in figure 7. At this stage of the operation, the customer can save this page and print it off to provide a concise summary of the capacity and key components of his machine and take no further action.

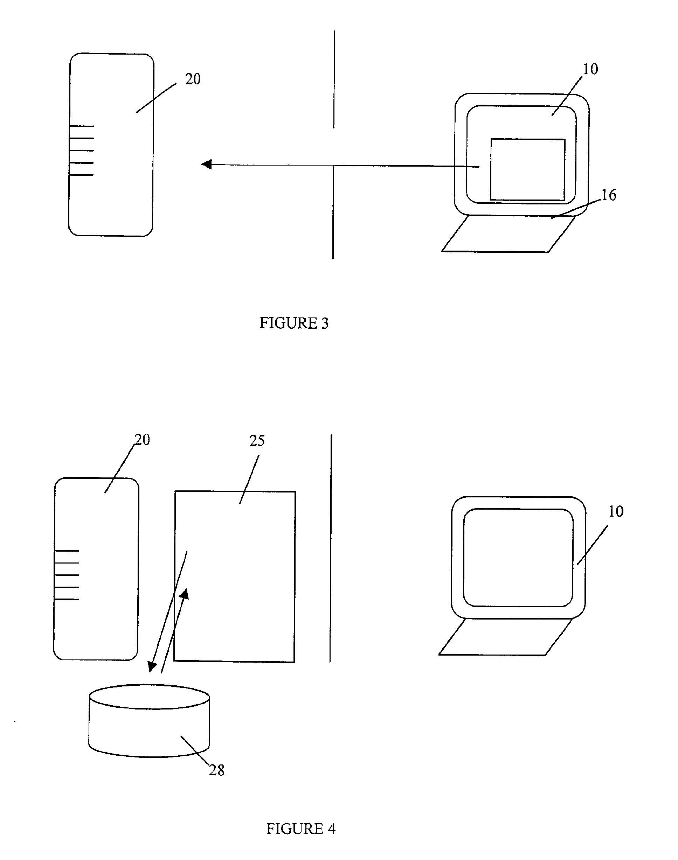

However as shown in Figure 3, the user can proceed to the next stage by transmitting the information listed on the html page 16 back to the web server 20 of the customer support service.

When the information is received by the web server 20 it creates an ASP page 25 which reads the information from the html page 16, conducts a search of the customer support service's database 28 for documents, manuals, drivers, patches, BIOS updates, advice, online tutorials *etc* specific to the customer's computer components, stores this information temporarily as a session variable and creates a personalized page which is streamed back to the customer. When the session is terminated, the ASP page 25 closes.

Also presenting the information to the user in session variables allows the web server 20 to customize every page where the customer is browsing without having to query the list of hardware on each page which the user can click. Buttons will be created on this page if the question on the button is appropriate e.g. Do I need to update my drivers? Do online manuals exist for this hardware? Do troubleshooting documents exist? and the user's web page 25 is then provided with the relevant information.

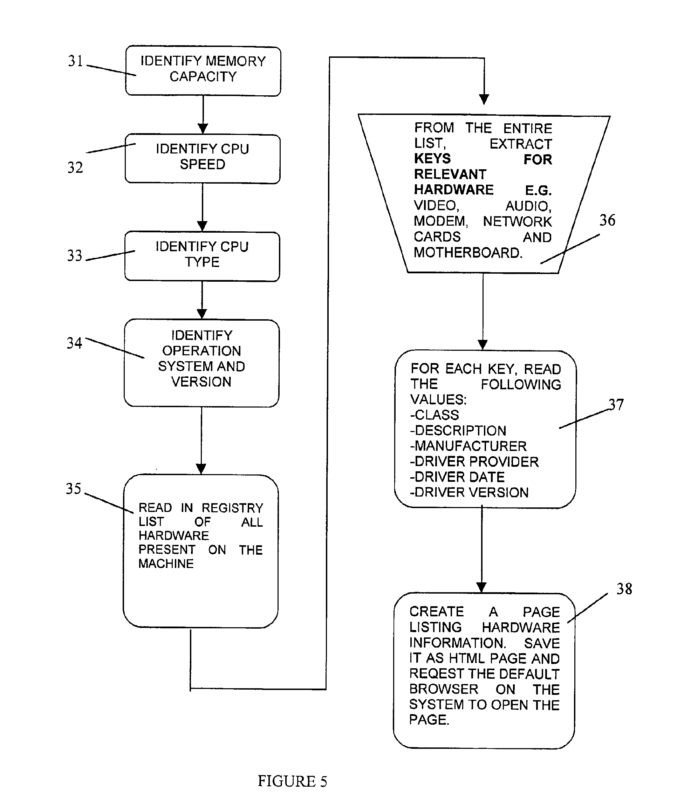

The operation of the utility 30 is shown in Figure 5 which illustrates the key steps which occur when the utility is operated on the user's computer 10. The first step at block 31 is to identify the memory capacity. At block 32 the utility identifies the speed of the central processing unit (CPU) of the user's computer and the CPU type at 33. The utility then identifies the operating system and version for the computer at 34 e.g. WINDOWS 95 (Trade Mark). The utility is then in a position to read at 35 in the registry in the user's computer the list of all hardware present on the machine. At block 36 the utility reads the information for the relevant hardware e.g. video, audio, modem and network cards and the motherboard.

For these keys the utility reads the specific values indicated at block 37, namely class, description, manufacture, driver provider, driver date and driver version. Having obtained this information, the utility then creates a page listing hardware information, this can be saved as a html page and can request the default browser on the computer system to open the page.

The creation of the html document that lists the user's system hardware and software components, formats this list to a html document and prints out on a web site for future reference is a major benefit for a user and for technical support service. The details of the client's computer are not uploaded onto the server of the customer support server, rather the information is secure on the user's hard drive. A query is performed on the remote database based on the information gained from running the utility.

It will of course be understood that the invention is not limited to the specific details described herein, which are given by way of example only, and that various modifications and alterations are possible within the scope of the invention and the appended claims.

## Claims

1. A method of providing support to a user of a computer comprising:
detecting specified hardware and software components of the user's computer from a register means in the computer;
creating a listing of the detected hardware and software components; and
storing the said listing on the user's computer as a separate retrievable document.

2. A method of providing support to a user of a computer according to Claim 1, including creating the listing of the detected hardware and software components as a data file.

3. A method of providing support to a user of a computer according to Claim 1 or Claim 2 including creating the listing of the detected hardware as document in a hypertext, markup language (html).

4. A method of providing support to a user of a computer as claimed in any one of the preceding claims including transmitting the listing to a customer support service via a computer network;
conducting a search of the customer support service's library of reference material;
preparing a second listing of reference material, information and/or advice relevant to the customer's listed components; and
posting said second listing to a web page for the user to evaluate.

5. A method of providing support to a user of a computer as claimed in Claim 4, including opening documents identified in said second listing, providing access to information specified in said second listing and when appropriate providing updates of information, code or instructions.

6. A method of providing support to a user of a computer as claimed in any one of the preceding claims, including installing in the computer of the user a program adapted to implement the features of the method.

7. A method of providing support to a user of a computer as claimed in Claim 6, including downloading the program from the website of the customer support service.

8. A method of providing support to a user of a computer as claimed in Claim 6 or Claim 7, including overwriting the stored listing to update the listing of the detected hardware and software components.

9. Apparatus for providing support to a user of a computer comprising:
means for detecting specified hardware and software components of the user's computer from a register means in the computer;
means for creating a listing of the detected hardware and software components; and
means for storing the said listing on the user's computer as a separate retrievable document.

10. Apparatus for providing support to a user of a computer according to Claim 9, including means for creating the listing of the detected hardware and software components as a data file.

11. Apparatus for providing support to a user of a computer according to Claim 9 or Claim 10, including means for creating the listing of the detected hardware as document in a hypertext, markup language (html).

12. Apparatus for providing support to a user of a computer as claimed in any one of Claims 9 to 11, including means for transmitting the listing to a customer support service via a computer network.
means for conducting a search of the customer support service's library of reference material;
means for preparing a second listing of reference material, information and/or advice relevant to the customer's listed components; and
means for posting said second listing to a web page for the user to evaluate.

13. Apparatus for providing support to a user of a computer as claimed in Claim 12, including means for opening documents identified in said second listing, means for providing access to information specified in said second listing and optionally for providing updates of information, code or instructions.

14. Apparatus for providing support to a user of a computer as claimed in any one of Claims 9 to 13, including means for installing in the computer of the user a program adapted to operate the said means of the apparatus.

15. Apparatus for providing support to a user of a computer as claimed in Claim 12, including means for downloading the program from the website of the customer support service.

16. Apparatus for providing support to a user of a computer as claimed in Claim 14 or Claim 15, including overwriting the stored listing to update the listing of the detected hardware and software components.
